# EUROPEAN PATENT APPLICATION

(11) **EP 4 776 133 A1**
(43) Date of publication of application: **15.07.2026**
(21) Application number: 25224508.9
(22) Date of filing: 17.12.2025
(51) Int. Cl.: G06F 9/50, G06N 3/063

(54) **METHOD AND SYSTEM FOR SPLITTING ARTIFICIAL NEURAL NETWORK WITH A DISTRIBUTED COMMUNICATION FRAMEWORK**

(30) Priority: 10.01.2025 IN 202521002446
(71) Applicant: Tata Consultancy Services Limited, Maharashtra (IN)
(72) Inventor: BHATTACHARYYA, Abhijan, 700160 Kolkata, West Bengal (IN); SAU, Ashis, 700160 Kolkata, West Bengal (IN); MAHATO, Suraj Kumar, 700160 Kolkata, West Bengal (IN)
(74) Representative: Goddar, Heinz J.

(57) **Abstract**

Embodiments herein provide a method and system for splitting an artificial neural network (ANN) between edge devices (edge) and a user equipment (UE) under supervision of an application cloud (AC) through a unified splitting AI framework (SAF). In AI operation splitting, a few layers of the artificial neural network (ANN) are computed at the endpoint itself. The intermediate result is transferred to the Edge/ Cloud for further computation. Besides distributing the computation load, this has another important advantage. If the first few layers of the ANN are computed at the endpoint itself, then that saves the resources required for transmission of the entire input signal because the intermediate result needs much less bandwidth than the actual input. Also, the ANN could start in the offloaded node only after receiving the entire input. So, splitting the ANN computation is beneficial in terms of the total computation latency as well.

## Description

### CROSS-REFERENCE TO RELATED APPLICATIONS AND PRIORITY

The present application claims priority to Indian application no. 202521002446, filed on January 10, 2025.

### TECHNICAL FIELD

The disclosure herein generally relates to the field of splitting artificial intelligence (AI) operation, and more particularly, a method and system for splitting an artificial neural network (ANN) between edge devices (edge) and a user equipment (UE) under supervision of an application cloud (AC) through a unified splitting AI framework (SAF).

### BACKGROUND

Success of many cutting edge application paradigms like telerobotics, semantic communication, interactive Augmented reality (AR) /virtual reality (VR), etc. rely on an embodied intelligent inference built on artificial neural networks (ANN). But the end nodes may not be capable of carrying out such tasks and computation offloading to a near-by edge-computer will be the design option in AI native network in 6G.

However, splitting the inference between the source-node and the offloaded device is expected to bring efficiency in terms of resource usage and response-time.

### SUMMARY

Embodiments of the present disclosure present technological improvements as solutions to one or more of the above-mentioned technical problems recognized by the inventors in conventional systems. For example, in one embodiment, a method for splitting an artificial neural network (ANN) between edge devices (edge) and a user equipment (UE) under supervision of an application cloud (AC) through a unified splitting AI framework (SAF) is provided. The processor-implemented method includes identifying at least one task requiring an artificial neural network (ANN) operation to be performed by an application on a user equipment (UE), via one or more hardware processors, requesting the UE component of the SAF (UE-SAF) to initiate the process for distributing the ANN operation using an ANN model with a model identifier required for the concerned task, via the one or more hardware processors, and assessing one or more available resources in the UE by the UE-SAF, via the one or more hardware processors.

Further, the processor-implemented method includes querying an edge component of the SAF (E-SAF) in a preconfigured edge-device on one or more resources available on that edge device and processor type on the edge, estimating an available band with between the UE and the edge device by the UE-SAF, sending a request to AC component of SAF (AC-SAF) by the UE-SAF, wherein the request comprising the ANN model Identification (ID), type of the input information with a range of possible data-size, available resources on the UE, the processor details of the UE, available bandwidth between the UE and the edge, and a pointer to the edge computer, and identifying an ANN model by the AC component of SAF (AC-SAF) from a cloud repository based on the requested ANN model ID, via the one or more hardware processors.

Furthermore, the processor-implemented method includes loading preconfigured data on a required computation load in terms of the number of instructions per second required for computation of each layer of the identified ANN model, the possible data size at the output of each layer for different preconfigured input classes, set of the layer numbers (L) from where the ANN can be partitioned into any two halves, via the one or more hardware processors, invoking a computation process on the ANN model using a split decision engine under the cloud supervision, via the one or more hardware processors, wherein the ANN model layers are split into a first set of layers and a second set of layers based on the split point and continuing with the operation further with the given split point until a deviation from the desired latency or change in resource status due to power reduction, change in processor load, etc. is observed by the UE-SAF and re-initiate the split process with the AC-SAF at the onset of any deviation from the KPI.

In another embodiment, a system for splitting an artificial neural network (ANN) between edge devices (edge) and a user equipment (UE) under supervision of an application cloud (AC) through a unified splitting AI framework (SAF) is provided. The system comprises a memory storing a plurality of instructions, one or more Input/Output (I/O) interfaces, and one or more hardware processors coupled to the memory via the one or more I/O interfaces. The one or more hardware processors are configured by the instructions to identify at least one task requiring an artificial neural network (ANN) operation to be performed by an application on a user equipment (UE), request the UE component of the SAF (UE-SAF) to initiate the process for distributing the ANN operation using an ANN model with a model identifier required for the concerned task, and assess one or more available resources in the UE by the UE-SAF, via the one or more hardware processors.

Further, The one or more hardware processors are configured by the instructions to query an edge component of the SAF (E-SAF) in a preconfigured edge-device on one or more resources available on that edge device and processor type on the edge, estimate an available band with between the UE and the edge device by the UE-SAF, send a request to AC component of SAF (AC-SAF) by the UE-SAF, wherein the request comprising the ANN model Identification (ID), type of the input information with a range of possible data-size, available resources on the UE, the processor details of the UE, available bandwidth between the UE and the edge, and a pointer to the edge computer, and identify an ANN model by the AC component of SAF (AC-SAF) from a cloud repository based on the requested ANN model ID.

The one or more hardware processors are configured by the instructions to load preconfigured data on a required computation load in terms of the number of instructions per second required for computation of each layer of the identified ANN model, the possible data size at the output of each layer for different preconfigured input classes, set of the layer numbers from where the ANN can be partitioned into any two halves, invoke a computation process on the ANN model using a split decision engine under the cloud supervision, wherein the ANN model layers are split into a first set of layers and a second set of layers based on the split point and continue with the operation further with the given split point until a deviation from the desired latency or change in resource status due to power reduction, change in processor load, etc. is observed by the UE-SAF and re-initiate the split process with the AC-SAF at the onset of any deviation from the KPI.

In yet another aspect, there are provided one or more non-transitory machine-readable information storage mediums comprising one or more instructions, which when executed by one or more hardware processors causes a method for splitting an artificial neural network (ANN) between edge devices (edge) and a user equipment (UE) under supervision of an application cloud (AC) through a unified splitting AI framework (SAF) is provided. The processor-implemented method includes identifying at least one task requiring an artificial neural network (ANN) operation to be performed by an application on a user equipment (UE), via one or more hardware processors, requesting the UE component of the SAF (UE-SAF) to initiate the process for distributing the ANN operation using an ANN model with a model identifier required for the concerned task, via the one or more hardware processors, and assessing one or more available resources in the UE by the UE-SAF, via the one or more hardware processors.

Further, the processor-implemented method includes querying an edge component of the SAF (E-SAF) in a preconfigured edge-device on one or more resources available on that edge device and processor type on the edge, estimating an available band with between the UE and the edge device by the UE-SAF, sending a request to AC component of SAF (AC-SAF) by the UE-SAF, wherein the request comprising the ANN model Identification (ID), type of the input information with a range of possible data-size, available resources on the UE, the processor details of the UE, available bandwidth between the UE and the edge, and a pointer to the edge computer, and identifying an ANN model by the AC component of SAF (AC-SAF) from a cloud repository based on the requested ANN model ID, via the one or more hardware processors.

Furthermore, the processor-implemented method includes loading preconfigured data on a required computation load in terms of the number of instructions per second required for computation of each layer of the identified ANN model, the possible data size at the output of each layer for different preconfigured input classes, set of the layer numbers from where the ANN can be partitioned into any two halves, via the one or more hardware processors, invoking a computation process on the ANN model using a split decision engine under the cloud supervision, via the one or more hardware processors, wherein the ANN model layers are split into a first set of layers and a second set of layers based on the split point and continuing with the operation further with the given split point until a deviation from the desired latency or change in resource status due to power reduction, change in processor load, etc. is observed by the UE-SAF and re-initiate the split process with the AC-SAF at the onset of any deviation from the KPI.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for splitting an artificial neural network (ANN) between edge devices (edge) and a user equipment (UE) under supervision of an application cloud (AC) through a unified splitting AI framework (SAF), according to some embodiments of the present disclosure.
FIG. 2 is a schematic diagram illustrating a splitting an artificial neural network (ANN) between edge devices (edge) and a user equipment (UE) under supervision of an application cloud (AC) through a unified splitting AI framework (SAF), according to some embodiments of the present disclosure.
FIGS. 3A and 3B are an exemplary flow diagram illustrating a processor-implemented method for splitting an artificial neural network (ANN) between edge devices (edge) and a user equipment (UE) under supervision of an application cloud (AC) through a unified splitting AI framework (SAF), according to some embodiments of the present disclosure.
FIG. 4 is an architectural diagram of YOLO v5 network, according to some embodiments of the present disclosure.
FIG. 5 is a schematic diagram illustrating layer-by-layer profiling for Yolo v5 in terms of bandwidth and GFLOPS, according to some embodiments of the present disclosure.

### DETAILED DESCRIPTION OF EMBODIMENTS

Exemplary embodiments are described with reference to the accompanying drawings. In the figures, the left-most digit(s) of a reference number identify the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Success of many cutting edge application paradigms like telerobotics, semantic communication, interactive AR/VR, etc. rely on embodied intelligent inference built on artificial neural networks (ANN). But the end nodes may not be capable of carrying out such tasks and computation offloading to a near-by edge-computer will be the design option in AI native network in 6G. However, splitting the inference between the source-node and the offloaded device is expected to bring efficiency in terms of resource usage and response-time.

Embodiments herein provide a method and system for splitting an artificial neural network (ANN) between edge devices (edge) and a user equipment (UE) under supervision of an application cloud (AC) through a unified splitting AI framework (SAF). In AI operation splitting, a few layers (depending on the condition of the channel and the node) of the artificial neural network (ANN) are computed at the endpoint itself. The intermediate result is transferred to the Edge/ Cloud for further computation. Besides distributing the computation load, this has another important advantage. If the first few layers of the ANN are computed at the endpoint itself, then that saves the resources required for transmission of the entire input signal because the intermediate result needs much less bandwidth than the actual input. Also, the ANN could start in the offloaded node only after receiving the entire input. So, splitting the ANN computation is beneficial in terms of the total computation latency as well.

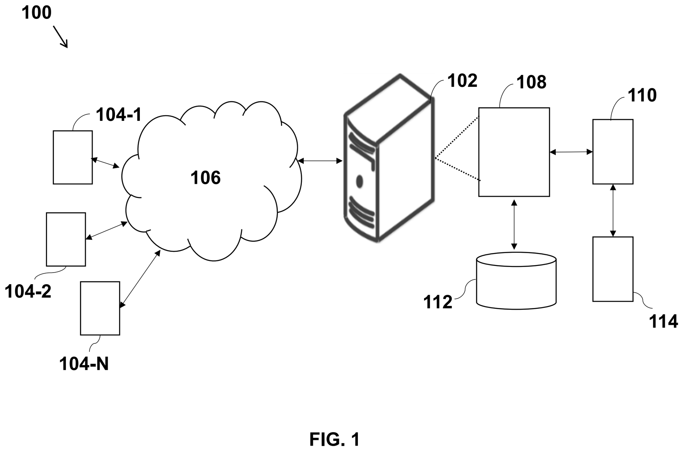

Referring now to the drawings, and more particularly to FIG. 1 through FIG. 5, where similar reference characters denote corresponding features consistently throughout the figures, there are shown preferred embodiments, and these embodiments are described in the context of the following exemplary system and/or method.

FIG. 1 illustrates a block diagram of a system 100 for splitting an artificial neural network (ANN) with a distributed communication framework, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH^{®}, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

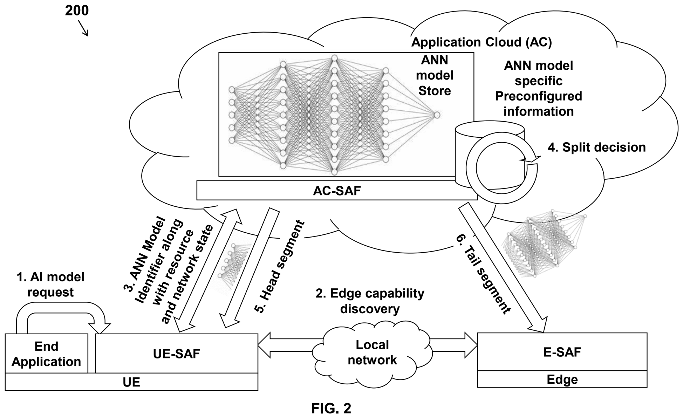

FIG. 2 is a functional block diagram 200 to illustrate the system 100 for splitting an artificial neural network (ANN) with a distributed communication framework, according to some embodiments of the present disclosure. Herein, a practical deployment of an entire communication set up is equipped with a Split AI Framework (SAF) distributed amongst the UE, the MEC and the Cloud. A user application in the UE requests certain inference task that needs a certain model and a desired response time with a desired level of accuracy. The UE does not have the model and needs to get from the Cloud. The UE component of the SAF gets the application intent and also checks UEs current and future processing load, remaining energy and the channel condition connecting the MEC. If authorized, the UE also gets the system condition for MEC. The MEC component of the SAF responds to the UE counterpart. The UE component of the SAF requests the Cloud counterpart of SAF with these details along with a pointer to the MEC. The Cloud component of the SAF identifies the model and decides on the splitting point, provides the model to both UE and MEC along with meta-information (if any) on splitting the inference task. In a most desired scenario, the UE should perform computation from input to a hidden layer of the DNN as specified by the Cloud and transfer the intermediate data to the MEC for rest of the computation. Once done the MEC serves the inference result to the UE.

The system is configured for splitting ANN to optimize a semantic communication (*SemCom*). The SemCom is largely dependent on the performance of the Deep neural networks (DNN), or any artificial neural network (ANN) based algorithms. Most modern AI algorithms are based on the ANN, and these require huge computing and energy. The SemCom is essentially a task oriented so depending on application context different ANN need to be commissioned for different tasks. A typical UE or Edge may not store all of them due to resource constraints. So, in a typical implementation the ANN demanded by the present semantic communication may be dynamically loaded from a global store like a cloud to both UE and the Edge with the defined splitting policy between the Edge and the UE.

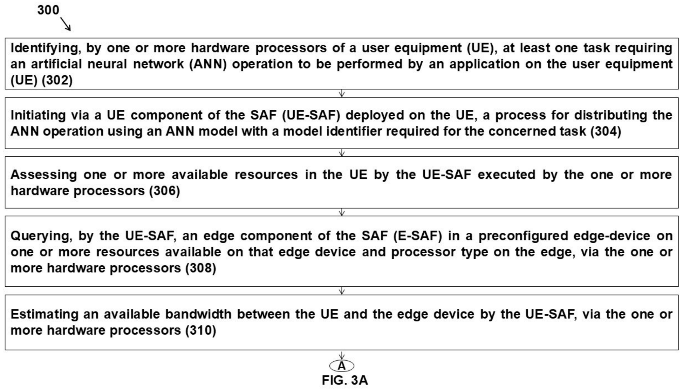

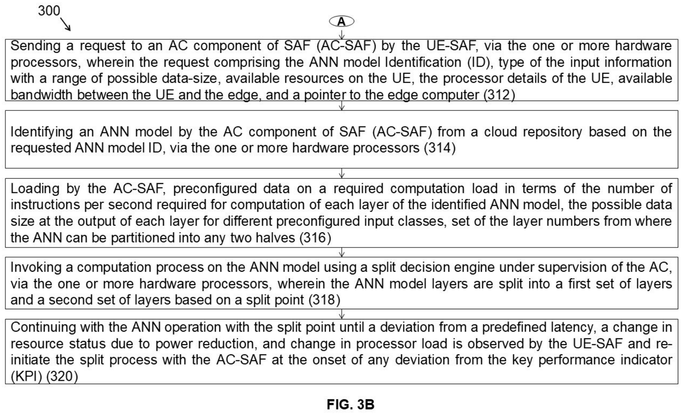

FIGS. 3A and 3B are flow diagram illustrating a processor-implemented method 300 for splitting an artificial neural network (ANN) between edge devices (edge) and a user equipment (UE) under supervision of an application cloud (AC) through a unified splitting AI framework (SAF) implemented by the system 100 of FIG. 1, in accordance with an embodiment of the present disclosure. Functions of the components of the system 100 are now explained through steps of flow diagram in FIGS. 3A and 3B, according to some embodiments of the present disclosure. In the method and system for splitting an artificial neural network (ANN) with a distributed communication framework.

Initially, at step 302 of the processor-implemented method 300, the one or more hardware processors 108 are configured by the programmed instructions to identify, by one or more hardware processors of a user equipment (UE), at least one task requiring an artificial neural network (ANN) operation to be performed by an application on the user equipment (UE).

At the next step 304 of the processor-implemented method 300, the one or more hardware processors 108 are configured by the programmed instructions to initiate via a UE component of the SAF (UE-SAF) deployed on the UE, a process for distributing the ANN operation using an ANN model with a model identifier required for the concerned task.

At the next step 306 of the processor-implemented method 300, the one or more hardware processors 108 are configured by the programmed instructions to assess one or more available resources in the UE executed by the UE-SAF.

At the next step 308 of the processor-implemented method 300, the one or more hardware processors 108 are configured by the programmed instructions to query, by the UE-SAF, an edge component of the SAF (E-SAF) in a preconfigured edge-device on one or more resources available on that edge device and processor type on the edge.

At the next step 310 of the processor-implemented method 300, the one or more hardware processors 108 are configured by the programmed instructions to estimate an available band between the UE and the edge device by the UE-SAF.

At the next step 312 of the processor-implemented method 300, the one or more hardware processors 108 are configured by the programmed instructions to send a request to an AC component of SAF (AC-SAF) by the UE-SAF. Herein, the request comprising the ANN model Identification (ID), type of the input information with a range of possible data-size, available resources on the UE, the processor details of the UE, available bandwidth between the UE and the edge, and a pointer to the edge computer.

At the next step 314 of the processor-implemented method 300, the one or more hardware processors 108 are configured by the programmed instructions to identify an ANN model by the AC component of SAF (AC-SAF) from a cloud repository based on the requested ANN model ID.

At the next step 316 of the processor-implemented method 300, the one or more hardware processors 108 are configured by the programmed instructions to load, by the AC-SAF, preconfigured data on a required computation load in terms of the number of instructions per second required for computation of each layer of the identified ANN model, the possible data size at the output of each layer for different preconfigured input classes, set of the layer numbers (L) from where the ANN can be partitioned into any two halves.

At the next step 318 of the processor-implemented method 300, the one or more hardware processors 108 are configured by the programmed instructions to invoke a computation process on the ANN model using a split decision engine under supervision of the AC.

The computation process estimates a split point by firstly classifying the input information into a preconfigured input class, then, for each layer number l_i in set L, do the following:
i. calculate the total number of instructions up to l_i and the potential time (T_UE) required by the UE processor.
ii. calculate the total number of instructions (1_i + 1) th layer to the end of the ANN and the potential time (T_E) required by the edge processor.
iii. get an estimate of the size (S) of the output after the layer l_i based on the input classification.
iv. calculate the potential latency (T_d) of delivering the size (S) from the UE to the edge based on the available bandwidth information of the link between the UE and the Edge.
v. calculate the possible total latency of the AI operation T_l_i by summing T_UE, T-E and T_d then,
vi. identify the l_i for which T_l_i is closest to the desired latency indicated by the application KPI and mark that l_i as the splitting point.

The ANN model layers are split into a first set of layers and a second set of layers based on a split point. The splitting of the ANN model by the AC is based on the task details, the UE capabilities, the network condition and the Edge resources.

The first set of layers are allocated to the UE application by the UE-SAF, and the second set of layers are allocated to the Edge by the E-SAF. The UE application executes the task using the first set of layers and transmits an output from the execution to the edge. The output transmitted by the UE is executed by the edge using the second set of layers of the ANN model to generate a final output by the edge. The final output is shared with the UE.

The edge device and the UE communicate over a network to exchange intermediate outputs of the first set of layers of the ANN model. The cloud server stores and updates a performance database to optimize future task distribution for similar workloads.

Finally, at the last step 320 of the processor-implemented method 300, the one or more hardware processors 108 are configured by the programmed instructions to continuing with the ANN operation with the split point until a deviation from a predefined latency, a change in resource status due to power reduction, and change in processor load is observed by the UE-SAF and re-initiate the split process with the AC-SAF at the onset of any deviation from the key performance indicator (KPI).

### Experiments:

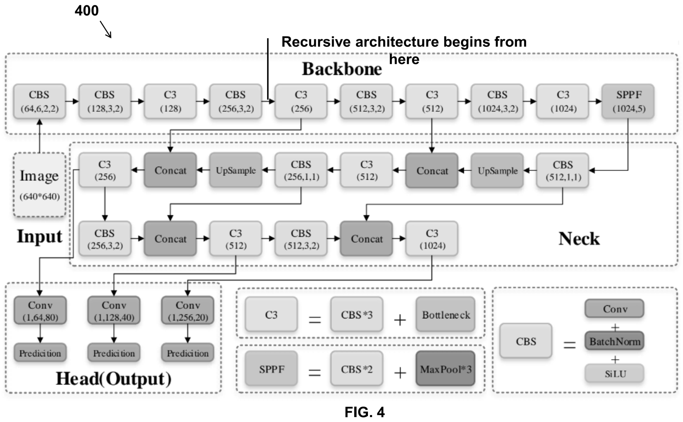

FIG. 4 is an architectural diagram of YOLO v5 network, according to some embodiments of the present disclosure. Herein, beyond the 4th layer there is a recursive architecture. Hence, the first four bars in the profile can be chosen as candidate split points. As they all have equal bandwidth, the optimization needs to be done based on the collective computation load for all the layers to be computed in the UE.

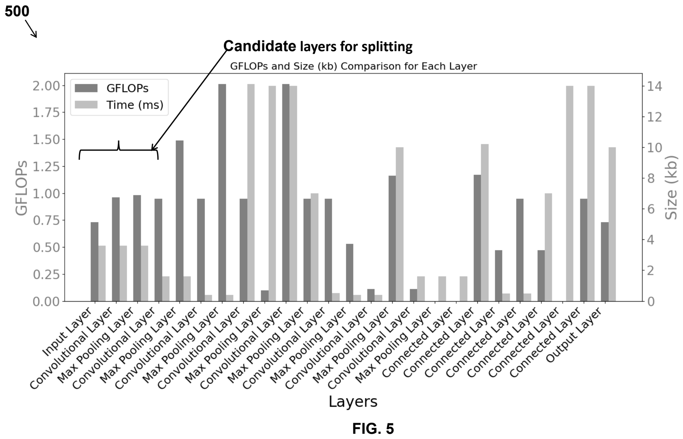

A profiling exercise is done for splitting a typical task of real-time inference of the view from a dashboard. The dashboard view is captured in high definition (HD) resolution for 100 different instances. The average computation load is profiled in terms of giga floating-point operations per second (GFLOPS) and the resultant size of the interim result after execution of each layer as shown in FIG 5.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of communication from the semantic aspects. Embodiments herein provide a method and system for a semantic communication with networked AI in sixth-generation technology for wireless communications (6G). Here, rather than encoding the input and transmitting the encoded symbols, the semantically relevant information is inferred from the input as per the context of the application and that information is encoded through conventional source encoding and transmitted. Conversion of the actual input to semantic information allows a huge reduction in the bandwidth requirement for the end-to-end channel. On the receiver side, these symbols are first decoded to extract semantic information. The semantic information is further used to predict the semantically relevant output to carry out the intended meaning at the receiver side.

It is to be understood that the scope of the protection is extended to such a program and in addition to a computer-readable means having a message therein; such computer-readable storage means comprises of program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) comprising:
identifying (302), by one or more hardware processors of a user equipment (UE), at least one task requiring an artificial neural network (ANN) operation to be performed by an application on the user equipment (UE);
initiating (304) via a UE component of an unified splitting AI framework (UE-SAF) deployed on the UE, a process for distributing the ANN operation using an ANN model with a model identifier required for the concerned task;
assessing (306) one or more available resources in the UE by the UE-SAF executed by the one or more hardware processors;
querying (308), by the UE-SAF, an edge component of the SAF (E-SAF) in a preconfigured edge-device on one or more resources available on that edge device and processor type on the edge, via the one or more hardware processors;
estimating (310) an available band with between the UE and the edge device by the UE-SAF, via the one or more hardware processors;
sending (312) a request to an AC component of SAF (AC-SAF) by the UE-SAF, via the one or more hardware processors, wherein the request comprising the ANN model Identification (ID), type of the input information with a range of possible data-size, available resources on the UE, the processor details of the UE, available bandwidth between the UE and the edge, and a pointer to the edge computer;
identifying (314) an ANN model by the AC component of SAF (AC-SAF) from a cloud repository based on the requested ANN model ID, via the one or more hardware processors;
loading (316), by the AC-SAF, preconfigured data on a required computation load in terms of the number of instructions per second required for computation of each layer of the identified ANN model, the possible data size at the output of each layer for different preconfigured input classes, set of the layer numbers (L) from where the ANN can be partitioned into any two halves, via the one or more hardware processors;
invoking (318) a computation process on the ANN model using a split decision engine under supervision of the AC, via the one or more hardware processors, wherein the ANN model layers are split into a first set of layers and a second set of layers based on a split point; and
continuing (320) with the ANN operation with the split point until a deviation from a predefined latency, a change in resource status due to power reduction, and change in processor load is observed by the UE-SAF and re-initiate the split process with the AC-SAF at the onset of any deviation from the key performance indicator (KPI).

2. The processor-implemented method (300) as claimed in claim 1, wherein comprising:
deploying the first set of layers at the UE application by the UE-SAF and the second set of layers at the Edge by the E-SAF;
executing, by the UE application, the task using the first set of layers;
transmitting, by the UE, an output from the execution to the edge;
executing, by the edge, the output transmitted using the second set of layers of the ANN model;
generating, by the edge, a final output; and
sharing a final output with the UE.

3. The processor-implemented method (300) as claimed in claim 1, wherein the splitting of the ANN model by the AC is based on the task details, the UE capabilities, the network condition and the Edge resources.

4. The processor-implemented method (300) as claimed in claim 1, wherein the edge device and the UE communicate over a network to exchange intermediate outputs of the first set of layers of the ANN model.

5. The processor-implemented method (300) as claimed in claim 1, wherein the cloud server stores and updates a performance database to optimize future task distribution for similar workloads.

6. A system (100) comprising:
a memory (110) storing instructions;
one or more Input/Output (I/O) interfaces (104); and
one or more hardware processors (108) coupled to the memory (110) via the one or more I/O interfaces (104), wherein the one or more hardware processors (108) are configured by the instructions to:
identify at least one task requiring an artificial neural network (ANN) operation to be performed by an application on a user equipment (UE), via one or more hardware processors;
request the UE component of an unified splitting AI framework (UE-SAF) to initiate the process for distributing the ANN operation using an ANN model with a model identifier required for the concerned task, via the one or more hardware processors;
assess one or more available resources in the UE by the UE-SAF, via the one or more hardware processors;
query an edge component of the SAF (E-SAF) in a preconfigured edge-device on one or more resources available on that edge device and processor type on the edge, via the one or more hardware processors;
estimate an available band with between the UE and the edge device by the UE-SAF, via the one or more hardware processors;
send a request to AC component of SAF (AC-SAF) by the UE-SAF, via the one or more hardware processors, wherein the request comprising the ANN model Identification (ID), type of the input information with a range of possible data-size, available resources on the UE, the processor details of the UE, available bandwidth between the UE and the edge, and a pointer to the edge computer;
identify an ANN model by the AC component of SAF (AC-SAF) from a cloud repository based on the requested ANN model ID, via the one or more hardware processors;
load preconfigured data on a required computation load in terms of the number of instructions per second required for computation of each layer of the identified ANN model, the possible data size at the output of each layer for different preconfigured input classes, set of the layer numbers (L) from where the ANN can be partitioned into any two halves, via the one or more hardware processors;
invoke a computation process on the ANN model using a split decision engine under the cloud supervision, via the one or more hardware processors, wherein the ANN model layers are split into a first set of layers and a second set of layers based on the split point; and
continue with the operation further with the given split point until a deviation from the desired latency or change in resource status due to power reduction, change in processor load, etc. is observed by the UE-SAF and re-initiate the split process with the AC-SAF at the onset of any deviation from the KPI.

7. The system (100) as claimed in claim 6, wherein comprising:
deploying the first set of layers at the UE application by the UE-SAF and the second set of layers at the Edge by the E-SAF;
executing, by the UE application, the task using the first set of layers;
transmitting, by the UE, an output from the execution to the edge;
executing, by the edge, the output transmitted using the second set of layers of the ANN model;
generating, by the edge, a final output; and
sharing a final output with the UE.

8. The system (100) as claimed in claim 6, wherein the splitting of the ANN model by the cloud is based on the task details, the UE capabilities, the network condition and the Edge resources.

9. The system (100) as claimed in claim 6, wherein the edge device and UE communicate over a network to exchange intermediate outputs of the first set of layers of the ANN model.

10. The system (100) as claimed in claim 6, wherein the cloud server stores and updates a performance database to optimize future task distribution for similar workloads.

11. One or more non-transitory machine-readable information storage mediums comprising one or more instructions which when executed by one or more hardware processors cause:
identifying, by a user equipment (UE), at least one task requiring an artificial neural network (ANN) operation to be performed by an application on the user equipment (UE);
initiating via a UE component of an unified splitting AI framework (UE-SAF) deployed on the UE, a process for distributing the ANN operation using an ANN model with a model identifier required for the concerned task;
assessing one or more available resources in the UE by the UE-SAF;
querying, by the UE-SAF, an edge component of the SAF (E-SAF) in a preconfigured edge-device on one or more resources available on that edge device and processor type on the edge;
estimating an available band with between the UE and the edge device by the UE-SAF;
sending a request to an AC component of SAF (AC-SAF) by the UE-SAF, wherein the request comprising the ANN model Identification (ID), type of the input information with a range of possible data-size, available resources on the UE, the processor details of the UE, available bandwidth between the UE and the edge, and a pointer to the edge computer;
identifying an ANN model by the AC component of SAF (AC-SAF) from a cloud repository based on the requested ANN model ID;
loading, by the AC-SAF, preconfigured data on a required computation load in terms of the number of instructions per second required for computation of each layer of the identified ANN model, the possible data size at the output of each layer for different preconfigured input classes, set of the layer numbers (L) from where the ANN can be partitioned into any two halves;
invoking a computation process on the ANN model using a split decision engine under supervision of the AC, wherein the ANN model layers are split into a first set of layers and a second set of layers based on a split point; and
continuing with the ANN operation with the split point until a deviation from a predefined latency, a change in resource status due to power reduction, and change in processor load is observed by the UE-SAF and re-initiate the split process with the AC-SAF at the onset of any deviation from the key performance indicator (KPI).

12. The one or more non-transitory machine-readable information storage mediums as claimed in claim 11, wherein comprising:
deploying the first set of layers at the UE application by the UE-SAF and the second set of layers at the Edge by the E-SAF;
executing, by the UE application, the task using the first set of layers;
transmitting, by the UE, an output from the execution to the edge;
executing, by the edge, the output transmitted using the second set of layers of the ANN model;
generating, by the edge, a final output; and
sharing a final output with the UE.

13. The one or more non-transitory machine-readable information storage mediums as claimed in claim 11, wherein the splitting of the ANN model by the AC is based on the task details, the UE capabilities, the network condition and the Edge resources.

14. The one or more non-transitory machine-readable information storage mediums as claimed in claim 11, wherein the edge device and the UE communicate over a network to exchange intermediate outputs of the first set of layers of the ANN model.

15. The one or more non-transitory machine-readable information storage mediums as claimed in claim 11, wherein the cloud server stores and updates a performance database to optimize future task distribution for similar workloads.
